# EUROPÄISCHE PATENTANMELDUNG

(11) **EP 0 816 790 A2**
(43) Veröffentlichungstag der Anmeldung: **07.01.1998**
(21) Anmeldenummer: 97110435.1
(22) Anmeldetag: 26.06.1997
(51) Int. Cl.: F28F 13/00

(54) **Wärmeübertragungselement, insbesondere zur Verwendung für Raumlüftungseinrichtungen mit Wärmerückgewinnung**

(30) Priorität: 27.06.1996 DE 19625772; 02.05.1997 DE 19718625
(71) Anmelder: UNIVERSITÄT KARLSRUHE, (TECHNISCHE HOCHSCHULE), D-76128 Karlsruhe 1 (DE)
(72) Erfinder: Löffler, Michael, 67650 Kaiserslautern (DE)
(74) Vertreter: Zahn, Roland, Dipl.-Ing.

(57) **Zusammenfassung**

In Verbindung mit einem Wärmeübertragungselement mit von einem Wärmeübertragungsmedium durchströmten Fluidräumen (1,11,21) wird vorgeschlagen, daß die Fluidräume mit Kunststoffspänen (2,12,22) beziehungsweise Metallspänen oder Metallwolle, d.h. Feststoffpartikeln mit großer Oberfläche bezogen auf das spezifische Gewicht einerseits und geringer Überströmungslänge des Fluids (Wärmeübertragungsmediums) andererseits, gefüllt sind, und zwar vorzugsweise derart daß die Späne beziehungsweise die Metallwolle locker in die Fluidräume gefüllt sind.

## Beschreibung

Die vorliegende Erfindung bezieht sich auf ein Wärmeübertragungselement mit von Wärmeübertragungsmedium durchströmten Fluidräumen.

Unter einem Wärmeübertrager beziehungsweise Wärmeaustauscher versteht man eine technische Apparatur zur Übertragung und eventuellen Rückgewinnung von Wärmeenergie, wobei Wärme von einem relativ warmen Medium (zum Beispiel Wasser, Luft, Gas) an ein relativ kaltes Medium abgegeben wird. Grundsätzlich unterscheidet man bei Wärmeübertragern Rekuperatoren und Regeneratoren.

Rekuperatoren sind kontinuierlich nach dem Gegen-, Gleich- oder Querstrom arbeitende Wärmeübertrager, wobei das wärmeabgebende vom wärmeaufzunehmenden Medium durch eine Trennwand (Rohrwand) isoliert ist. Vorwiegende Ausführungsarten sind Rohrbündel- und Doppelrohr-Wärmeübertrager.

Regeneratoren arbeiten diskontinuierlich und besitzen im allgemeinen eine gerade Anzahl von Kammern (mindestens zwei), deren eine Hälfte durch die heißen Gase (zum Beispiel Abgase) erhitzt wird, während die andere Hälfte durch die zu erwärmenden Gase (zum Beispiel Frischgase) abkühlt. Nach einer bestimmten Zeit werden die Kammern umgeschaltet. Prinzipiell sind auch Regeneratoren mit nur einer Kammer bekannt.

Mit anderen Worten unterscheiden sich Regeneratoren und Rekuperatoren dadurch, daß im einen Fall Wärme von einem Fluid in einer Art Zwischenspeicher (Generator) zwischengespeichert und danach vom Regenerator zu einem zweiten Fluid übertragen wird, während im anderen Fall Wärme von einem Fluid über Trennwände (Rekuperatoren) direkt an das andere Fluid übertragen wird.

Gemäß dem Stand der Technik sind Rekuperatoren bekannt, die beispielsweise aus Metallplatten bestehen, zwischen denen sich ein gewelltes Blech befindet. Das gewellte Blech soll dabei die Wärmeübertragungsfläche zwischen den Fluiden (Wärmeübertragungsmedien) und dem Rekuperator vergrößern. Ferner sind schachbrettartig konzipierte Gegenstromwärmetauscher, zum Beispiel aus Kunststoff, bekannt, welche an sich bereits sehr gute Wirkungsgrade aufweisen.

Gemäß dem Stand der Technik (WO 94/18507) sind auch bereits regenerative Wärmetauscher, das heißt Regeneratoren, bekannt, bei denen den Fluidräumen eine sandwichartig aufgebaute Kassette mit wärme-absorbierendem Einsatz aus gepreßten Kunststoff- und Metallspänen zugeordnet ist. Es ist ohne weiteres nachzuvollziehen, daß diese gepreßten Einsätze lüftungstechnisch betrachtet ungünstige Eigenschaften haben.

Dem Wärmeübergang zwischen den Fluiden und einem Regenerator beziehungsweise zwischen den Fluiden und einem Rekuperator kommt eine ganz besondere Bedeutung zu. Je besser, d.h. effizienter, der Wärmeübergang (k x A) ist, um so kleiner und damit kostengünstiger können Wärmeübertrager hergestellt werden. Der Parameter k entspricht dabei dem Wärmeübergangskoeffizienten des Fluids auf den Regenerator beziehungsweise auf den Rekuperator und der Parameter A entspricht der wirksamen Fläche des Regenerators beziehungsweise des Rekuperators.

Die der vorliegenden Erfindung zugrunde liegende Aufgabe ist darin zu sehen, ein Wärmeübertragungselement, das heißt Rekuperatoren bzw. Regeneratoren vorzuschlagen, welche einen dem Stand der Technik gegenüber erhöhten Wärmeübergang (k x A) aufweisen.

Die grundsätzliche Lösung der Aufgabe ist darin zu sehen, daß die Fluidräume mit Kunststoffspänen beziehungsweise Metallspänen oder Metallwolle, d.h. Feststoffpartikeln mit großer Oberfläche bezogen auf das spezifische Gewicht einerseits und geringer Überströmungslänge des Fluids (Wärmeübertragungsmediums) andererseits, gefüllt sind.

Mit anderen als im vorstehend wiedergegebenen Anspruch 1 gebrauchten Worten besteht der Kern der vorliegenden Erfindung darin, den Raum, durch welchen die Fluide im Rekuperator oder im Regenerator strömen, mit Kunststoffspänen beziehungsweise Metallspänen oder mit Metallwolle, zu füllen, wobei sich bei Verwendung von metallischen Teilchen Aluminium oder Edelstahl als besonders vorteilhaft erwiesen haben, da diese Metalle rostfrei sind und eine hohe Wärmeleitfähigkeit aufweisen. Wesentlich im Hinblick auf den Füllstoff, der unter Umständen als Abfallstoff bezogen werden kann, ist, daß dieser Füllstoff bezogen auf das spezifische Gewicht eine relativ große Oberfläche hat, was bei Spänen, das heißt etwa 2 mm breiten bzw. 0,1 mm dicken länglichen Metallteilchen definitionsgemäß gewährleistet ist. Die Spangeometrie ist (dabei definitionsgemäß) so, daß keine Kondensatabscheidungen auf den Spänen auftreten können, da sonst Staub festkleben würde und die Reinheit des Wärmeübertragungsmediums nicht gewährleistet wäre.

Kunststoffspäne beziehungsweise Metallspäne oder Metallwolle haben sich insoweit als besonders vorteilhaft erwiesen, da sie einen besonders hohen Wärmeübergangskoeffizienten zum durchströmenden Fluid haben. Theoretischen Überlegungen haben gezeigt, daß auf der Basis von erfindungsgemäß konzipierten Wärmeübertragungselementen Luft mit einer Geschwindigkeit von 25 cm/sec eine erhebliche Verbesserung des Wärmeübergangs erreicht wird, nämlich etwa 40 W/m² K gegenüber nur etwa 5 W/m² K. Da die Späne beziehungsweise die Metallwolle an den Trennwänden anliegen, wird ein sehr guter Wärmeaustausch erreicht. Dabei kann in Verbindung mit Rekuperatoren bei Verwendung von metallischen Füllstoffen gegebenenfalls die Kontaktfläche insoweit künstlich vergrößert werden, als zum Beispiel eine Trennwand aus Kunststoff mit einer Metallspanfüllung beziehungsweise Metallwollefüllung erhitzt wird, so daß der Kunststoff weich wird und die Metallspäne beziehungsweise die Metallwolle sich im Kunststoff innig verhaken (können).

In einer Beispielrechnung für Rekuperatoren wurde der Wärmeübergang zwischen den Fluiden und einer Trennwand auf etwa das Achtfache erhöht, was nichts anderes bedeutet, als daß ein Wärmeübertrager mit den gleichen thermischen Eigenschaften nur ein Achtel der Baulänge eines üblichen Wärmeübertragers aufweist. Dabei wird sich durch die wesentlich geringere Länge des Wärmeaustauschers gleichzeitig der Luftwiderstand verringern, so daß an sich zu erwarten wäre, daß die erforderliche Lüfterleistung größer wird.

Eine besondere Verwendung der erfindungsgemäßen Wärmeübertragungselemente ergibt sich in Verbindung mit einer Raumlüftung mit regenerativer Wärmerückgewinnung, wobei ein mittels einer lockeren Füllung aus (Kunststoff- und Metall-) Spänen beziehungsweise Metallwolle realisierter Regenerator und ein Lüfter koaxial gemeinsam in einem Rohr, vorzugsweise einem Aluminium- oder Kunststoffrohr eingefügt sind und wobei eine aus zwei Rohren bestehende Lüftungseinheit vorgesehen ist, bei der beide Rohre nebeneinander in einer Wandöffnung montiert sind. Die Lüfter der beiden Rohre werden dabei insoweit gegenläufig betrieben, als jeweils ein Lüfter saugt, während der andere bläst, und umgekehrt.

Allgemein ist insoweit noch folgendes anzumerken: Lüftungsanlagen mit Wärmerückgewinnung ermöglichen die Nutzung von Wärme, die normalerweise beim Lüften verloren geht. Bekannt sind insoweit zentrale Anlagen mit einer Rückgewinnungseinheit, die im Kreuzstrom- oder im Gegenstrombetrieb arbeitet. Neuerdings gibt es auch dezentrale Anlagen, die regenerativ arbeiten und den Luftwechsel in einem Raum oder in mehreren durch Luftöffnungen verbundenen Räumen ermöglichen. Der Wirkungsgrad dieser Anlagen ist mit dem zentraler Anlagen vergleichbar und liegt bei etwa 70 bis 90 %. Für einen geschlossenen Luftbereich benötigt man dabei zwei Module, die bevorzugt 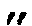 raumdiagonal 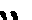 montiert werden. Dezentrale Anlagen haben den Vorteil, daß im Normalfall keine Lüftungsschächte benötigt werden; bei den zentralen Anlagen sind Raumbedarf und Mehrkosten für die Luftschächte als markante Nachteile zu sehen.

Auf der Basis der vorliegenden Erfindung soll letztlich eine dezentrale und kostengünstige Raumlüftung mit regenerativen Wärmetauschern geschaffen werden. Dies wird dadurch erreicht, daß der aus Metallspänen oder Metallwolle bestehende Regenerator und der beispielsweise als Rohreinschublüfter realisierte Lüfter in einem Rohr, vorzugsweise einem kostengünstigen Kunststoffrohr, montiert werden, dessen Länge der jeweiligen Mauerdicke angepaßt ist.

Die Enden der Rohre sind dabei so geformt, daß einerseits kein Regenwasser oder Schnee in die Lüftungsanlage gesogen wird und daß andererseits die in den Raum eingeblasene Luft nicht sofort wieder abgesogen wird (Luftkurzschluß). Die Enden der Rohre können abgewinkelt sein, so daß durch Drehen der Rohre im Innenraum verschiedene Lüftungssituationen geschaffen werden können. Die Umschaltung der Laufrichtung der Lüfter erfolgt zeitgesteuert, wobei der Umschalttakt lüfterdrehzahlabhängig und/oder raumfeuchteabhängig gewählt sein kann.

Durch die Integration von zwei Rohren mit je einem Lüfter und je einem Regenerator in einem gemeinsamen Gerät ist eine einfache Belüftung eines einzelnen Raums möglich. Die Lüfter laufen gegenläufig und die Laufrichtung wird zeitgesteuert oder auch temperaturgesteuert oder gegebenenfalls auch raumfeuchtegesteuert umgeschaltet. Eine temperaturgesteuerte Umschaltung hat den Vorteil, daß die Lüfterdrehzahl beliebig gewählt werden kann, ohne daß die Lüfter zu lange in eine Richtung laufen und dadurch der Wirkungsgrad der Anlage sinkt. Eine Zeitsteuerung hat den Vorteil, daß die Steuerelektronik einfacher aufgebaut und dadurch billiger ist. Im vorliegenden Falle wird von einer zeitgesteuerten Umschaltung mit lüfterdrehzahlabhängigen Umschalttakt ausgegangen. Eine zusätzliche Berücksichtigung der jeweiligen Raumfeuchte kann dann von Vorteil sein, wenn eine (gleichzeitige) Be- oder Entfeuchtung des jeweiligen Raums angestrebt wird.

Die erfindungsgemäße Belüftung wird auch deshalb billiger als herkömmliche regenerative Lüftungssysteme, weil nur an einer Stelle des Raums ein Mauerdurchbruch und eine Stromzuführung erforderlich sind. Im Gegensatz zu regenerativen Lüftungssystemen mit mehreren, örtlich getrennten Geräten ist die Funktionstüchtigkeit eines Lüftungssystems mit beiden Geräten in einer Maueröffnung auch bei starkem Wind gewährleistet, da sich der Lufteinlaß und der Luftauslaß auf gleichem Luftdruckniveau befinden. Einem 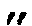 Kurzschluß 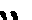 der Luft wird durch Luftumlenkung der Zu- und Abluftströme begegnet; die Rohre erzeugen im Innenraum ein Strömungsbild, welches eine gleichmäßige und zugfreie Belüftung gewährleistet.

Die Erfindung im allgemeinen und ihre Verwendung in Verbindung mit einer Raumlüftung im besonderen werden im folgenden anhand der Zeichnung näher erläutert. Diese zeigt in
- Fig. 1: einen Querschnitt durch einen Rekuperator eines schachbrettartig konzipierten Gegenströmwärmetauschers mit Spänen in den Fluidräumen;
- Fig. 2: eine Perspektivdarstellung eines Kreuzstromwärmetauschers mit Spänen in den Fluidräumen;
- Fig. 3: eine Perspektivdarstellung eines sich bewegenden Regenerators (Regeneratorrad) mit Spänen als Regenerator;
- Fig. 4: eine Schnittdarstellung durch eine Außenwand mit einer aus zwei Lüftern und zwei Regeneratoren bestehenden Lüftungseinheit.

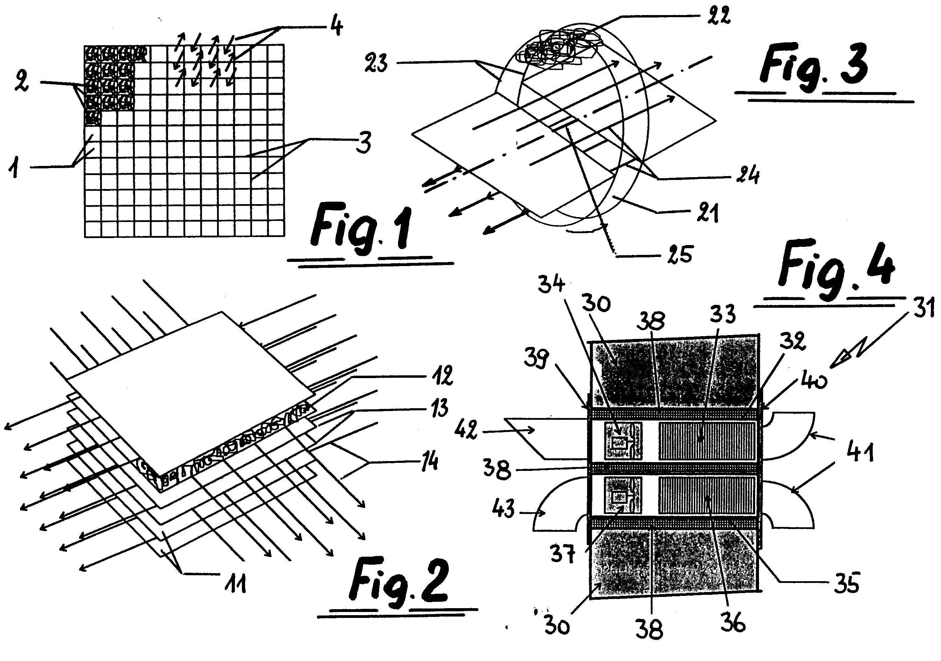

Bei den in den Fig. 1 / Fig. 2 und Fig. 3 dargestellten Ausführungsbeispielen sind die vom Wärmeträgermedium durchströmten Fluidräume 1, 11, 21 mit Spänen 2, 12, 22 gefüllt, was jedoch nur an einigen Stellen angedeutet ist. Die Strömung der Fluide, d.h. des Wärmeübertragungsmediums ist dabei durch Pfeile 4, 14, 24 angedeutet.

Fig. 1 zeigt Fluidräume 1, durch welche die Fluide 4 im Gegenstrom strömen. Die Fluidräume 1 sind mit Spänen 2 gefüllt, die in thermischem Kontakt mit Trennwänden 3 stehen.

Fig. 2 zeigt Fluidräume 11, durch welche die Fluide 14 im Kreuzstrom strömen. Die Fluidräume 11 sind mit Spänen 12 gefüllt, die wiederum in thermischem Kontakt mit den Trennwänden 13 stehen.

Im Hinblick auf die in Fig. 1 und Fig. 2 dargestellten Rekuperatoren ist noch anzumerken, daß der Wärmeübergang zu den Trennwänden 3 beziehungsweise 13 um so effektiver ist, je besser die Späne 2, 12 mit den Trennwänden 3, 13 Kontakt haben. Dieser Kontakt kann wie bereits erwähnt - dadurch verbessert werden, daß die Tennwände 3, 13 aus Kunststoff gefertigt werden, so daß die Späne 2, 12 durch gemeinsame Erwärmung oberflächlich eindringen und sich innig verhaken.

Fig. 3 zeigt Fluidräume 21, durch welche die Fluide 24 abwechselnd und entgegengesetzt strömen. Die Fluidräume 21 sind mit Spänen 22 gefüllt, die auf einem Regeneratorrad 23 befestigt sind. Dieses Regeneratorrad 23 dreht sich um eine Achse 25.

Fig. 4 zeigt ein in einer (Außen-) Wand 30 eingebautes Lüftungsgerät 31, das im wesentlichen aus einem ersten Kunststoffrohr 32 mit einem Regenerator 33 und einem Lüfter 34, sowie einem zweiten Rohr 35 mit einem Regenerator 36 und einem Lüfter 37 besteht. Die Regeneratoren 33, 36 sind insoweit durch eine partielle Spanfüllung des jeweiligen Rohres 32 beziehungsweise 35 realisiert, wobei ergänzend angemerkt wird, daß die Späne locker eingefüllt sind, um den Strömungswiderstand nicht unnötig zu erhöhen.

Die vorzugsweise durch Kunststoffrohre verifizierten Rohre 32, 35 sind mittels Dämmwolle 38 mechanisch mit der Wand 30 verbunden. Auf den beiden Seiten der Wand 30 sind je eine Außenblende 39 und eine Innenblende 40 mit Öffnungen zur Aufnahme der Rohre 32, 35 aufgesetzt. Ist die Wand 30 eine Außenwand, so werden die inneren Endstutzen 41 relativ zueinander rechtwinklig abgeknickt, so daß sie um 180° zueinander ausgerichtet sind; die äußeren Endstutzen sind abgeschrägt (vergleiche Bezugszeichen 42) beziehungsweise ebenfalls rechtwinklig abgeknickt (vergleiche Bezugszeichen 43), so daß kein Regen oder Schnee hineinfallen können.

Im praktischen Betrieb ist es so, daß in einem ersten Zeitintervall (Takt) Luft des einen Raums in den anderen Raum gesaugt wird und umgekehrt, wobei die wärmere (Innen-) Luft ihre Wärme an den Regenerator, d.h. an dessen Späne, abgibt, während die kältere (Außen-) Luft die Wärme des im vorherigen Takt erwärmten Regenerators aufnimmt. Die Regeneratoren dienen insoweit als Wärme-Zwischenspeicher.

## Patentansprüche

1. Wärmeübertragungselement mit von einem Wärmeübertragungsmedium durchströmten Fluidräumen,
dadurch gekennzeichnet,
daß die Fluidräume mit Kunststoffspänen beziehungsweise Metallspänen oder Metallwolle, d.h. Feststoffpartikeln mit großer Oberfläche bezogen auf das spezifische Gewicht einerseits und geringer Überströmungslänge des Fluids (Wärmeübertragungsmediums) andererseits, gefüllt sind.

2. Wärmeübertragungselement nach Anspruch 1,
dadurch gekennzeichnet,
daß die Metallspäne bzw. die Metallwolle auf der Basis von Aluminium oder Edelstahl realisiert sind.

3. Wärmeübertragungselement nach Anspruch 1 oder 2,
dadurch gekennzeichnet,
daß die Späne beziehungsweise die Metallwolle locker in die Fluidräume gefüllt sind.

4. Wärmeübertragungselement nach Anspruch 3,
zur Verwendung in Verbindung mit einer Raumlüftung mit regenerativer Wärmerückgewinnung,
wobei den Fluidräumen eine Einheit mit wärme-speicherndem Material zugeordnet ist,
dadurch gekennzeichnet,
daß das wärme-speichernde Material durch Metallspäne oder Metallwolle, insbesondere auf der Basis von Aluminium oder Edelstahl realisiert ist.

5. Raumlüftung nach Anspruch 4,
dadurch gekennzeichnet,
daß ein Regenerator und ein Lüfter koaxial gemeinsam in einem Rohr, vorzugsweise einem Aluminium- oder Kunststoffrohr, eingefügt sind und
wobei eine aus zwei Rohren bestehende Lüftungseinheit vorgesehen ist, bei der beide Rohre nebeneinander in einer Wandöffnung montiert sind.

6. Raumlüftung nach einem der Ansprüche 4 oder 5,
dadurch gekennzeichnet,
daß die Rohrenden teilweise drehbar angewinkelt oder angeschrägt sind oder mit einem Lüftungsgitter mit seitlicher Luftablenkung versehen sind.

7. Raumlüftung nach einem der Ansprüche 4 bis 6,
dadurch gekennzeichnet,
daß die Lüfter zeitgesteuert und drehzahlabhängig umschaltbar ausgebildet sind.

8. Raumlüftung nach einem der Anspsrüche 4 bis 7,
dadurch gekennzeichnet,
daß die Lüfter feuchteabhängig umschaltbar ausgebildet sind.

9. Wärmeübertragungselement nach einem der Ansprüche 1 bis 3,
gekennzeichnet durch seine Verwendung in Verbindung mit einem Rekuperator.

10. Wärmeübertragungselement nach Anspruch 8,
wobei als Trennwände für die Fluidräume Kunststoffelemente vorgesehen sind,
dadurch gekennzeichnet,
daß die Metallspäne oder die Metallwolle durch gemeinsame Erwärmung mit den Kunststoffelementen mit deren Oberfläche innig verhakt sind.
